# EUROPEAN PATENT SPECIFICATION

(11) **EP 2 517 852 B1**
(45) Date of publication and mention of the grant of the patent: **23.07.2014**
(21) Application number: 10839422.2
(22) Date of filing: 21.12.2010
(51) Int. Cl.: B29B 7/48, B29C 47/00, B29C 47/60, B29C 47/08, B29C 47/40

(54) **KNEADING SEGMENT, AND KNEADING APPARATUS COMPRISING SUCH A SEGMENT**
KNETSEGMENT SOWIE KNETAPPARAT ENTHALTEND EIN SOLCHES
SEGMENT DE MALAXAGE, ET APPAREIL DE MALAXAGE CONTENANT UN TEL SEGMENT

(30) Priority: 25.12.2009 JP 2009295056
(43) Date of publication of application: 31.10.2012
(73) Proprietor: Kabushiki Kaisha Kobe Seiko Sho, Chuo-ku Kobe-shi Hyogo 651-8585 (JP)
(72) Inventor: KIKUCHI, Naoki, Nishi-ku, Kobe-shi, Hyogo 651-2271 (JP); MIURA, Hodaka, Nishi-ku, Kobe-shi, Hyogo 651-2271 (JP); FUKUTANI, Kazuhisa, Nishi-ku, Kobe-shi, Hyogo 651-2271 (JP); YAMADA, Sayaka, Nishi-ku, Kobe-shi, Hyogo 651-2271 (JP)
(74) Representative: TBK
(86) International application number: PCT/JP2010/073053
(87) International publication number: WO 2011/078192

(56) References cited:
- JP-A- 10 225 967
- JP-A- 56 166 927
- JP-A- 62 284 718
- JP-A- 2001 522 736
- JP-A- 2003 164 746
- JP-A- 2003 245 534
- JP-A- 2003 245 534
- JP-A- 2006 527 665
- JP-A- 2008 132 672
- JP-A- 2008 132 672
- JP-U- 58 138 613
- JP-U- 58 138 613
- US-A- 3 195 868
- US-A- 5 318 358

## Description

### Technical Field

The present invention relates to a kneading segment and kneading equipment.

### Background Art

In general, in kneading equipment such as an extruder and a continuous mixer, materials such as pellets of a polymeric resin and additives in a powder form are supplied into a barrel and then fed downstream while the materials are kneaded by a pair of kneading screws inserted into the barrel. The kneading screw includes multiple segments of various types fixed in a penetrated state by a spline shaft provided at the center. Materials can be kneaded in accordance with a product application by combining a kneading segment such as a rotor segment or a kneading disk segment with a screw segment, for example.

Types of materials to be kneaded have increased recently, which requires improvement in kneading equipment performance. Therefore, kneading equipment has been developed which particularly uses a rotor segment employing the VCMT (Variable Clearance Mixing Technology) among the above-described kneading segments. As described in Patent Document 1, in the rotor segment employing the VCMT, a top surface of a kneading flight of a kneading screw is formed in a shape including convexes and concaves in the axial direction. As a result, between the top surface (extreme end surface) of the kneading flight and an inner wall surface of the barrel, portions having a large chip clearance and portions having a small chip clearance are alternately formed in the axial direction.

It is generally said that distributivity and dispersibility need to be imparted to the materials for proper kneading. On this occasion, the distributivity is a characteristic to evenly distribute particles of materials that have mixed in the materials to be kneaded. Moreover, the dispersibility is a characteristic to crash, if particles of the mixed materials contain particle clusters formed by particles clustering together, the particle clusters into finer forms. It is necessary to knead materials so as to shear the materials for imparting dispersibility to the materials, and it is necessary to knead materials so as to extend the materials for imparting distributivity to the materials. In the kneading screw employing the above-mentioned VCMT, materials are sheared at high-level chip portions having a small chip clearance, and the materials are extended at low-level chip portions having a large chip clearance. As a result, a high dispersibility and distributivity are imparted to the materials to be kneaded to obtain an excellent kneading performance.

### Citation List

### Patent Document

Patent Document 1: JP 2003 245534 A

### Summary of the Invention

### Problems to be Solved by the Invention

By the way, as described above, the VCMT is a technology for shearing and extending materials during resin kneading to improve both distributivity and dispersibility. There is recently a case where materials which are difficult to be kneaded with each other due to much differences of their molecular weight and melt viscosity are kneaded with each other, such as kneading of certain types of polyethylene and polypropylene. Kneading such materials which are hard to be kneaded may result in insufficient kneading and gel having a high molecular weight may be left in the materials after the kneading, even if a kneading screw with an enhanced kneading performance using the VCMT is employed. In order to suppress the gel, a decomposition promoting agent or the like may be added to the materials; however, it is impossible to completely eliminate the gel even if the decomposition promoting agent is used. In forming a film or a sheet from the kneaded materials, this gel results in defects such as small recesses called fisheyes and the like on the film or the sheet. It is preferable to surely prevent the gel formation during kneading.

The present invention has been devised in view of the foregoing problems and has an object to provide a kneading segment and kneading equipment which can surely knead materials without leaving gel.

### Means for Solving the Problem

A kneading segment and kneading equipment according to the present invention take the following technical measures in order to solve the above-described problem.

Specifically, the kneading segment according to the present invention is disposed on a kneading screw which is housed in a rotatable manner in a barrel having an inner cavity, and comprises a kneading flight kneading materials supplied into the barrel by rotating in accordance with rotation of the kneading screw, in which: a cutout section which is formed into a concaved shape on a top surface of the kneading flight by cutting out radially inward a portion, along the axis, of the top surface, and which is surrounded by two side surfaces facing each other in the axial direction and a bottom surface provided between these side surfaces is formed; and the cutout section is formed in a manner that an opening of the cutout section facing one side of the rotational direction of the kneading screw has a larger area than that of an opening facing the other side, by forming the bottom surface of the cutout section in a planar shape tilted in relation to the top surface.

The present inventors have found that it is effective, for eliminating portions that are not kneaded such as gel, to knead materials so as to extend the materials. The inventors then came up with an idea that materials are surely kneaded without leaving gel by improving the capability to knead the materials so as to extend the materials, which is a lacking capability in equipment such as the conventional VCMT. The inventors then obtained knowledge that, in cutting out a portion of an end surface of a kneading flight facing a barrel side such as a low-level chip portion of a kneading flight to which the VCMT is applied, by forming a bottom surface of the cutout section to be tilted so that the side from which the materials exit (exiting side) is narrower than a side which the materials enter (entrance side) during kneading, the materials which have flown into the cutout section during kneading are extended in a squeezed manner, so that a strong extending flow can be imparted to the materials. As a result, the inventors obtained knowledge that the materials can surely be kneaded without leaving gel and thereby completed the present invention.

In other words, in the kneading segment according to the present invention, the bottom surface of the cutout section is formed in a planar shape tilted in relation to the top surface, and the cutout section is formed in a manner that the exiting side from which the materials exit is narrower than the entrance side which the materials enter when the kneading screw rotates.

As a result, the materials can be kneaded in a manner that the materials are extended to impart an extending flow by directing the materials supplied to the cutout section to the opening opened as a small area on one side from the opening opened as a large area on the other side. Therefore, the materials can be kneaded without leaving portions as gel which have insufficiently been kneaded.

Moreover, it is preferable for the kneading flight to alternately include, in the axial direction, a high-level chip portion having a constant chip clearance in relation to an inner wall of the barrel, and a low-level chip portion having a larger chip clearance than that of the high-level chip portion, in which the low-level chip portion is formed by the cutout section.

The above-described kneading flight with which materials can be kneaded in a proper distributivity is particularly effective for a kneading screw employing the VCMT having high-level chip portions and low-level chip portions arranged alternately. Since the kneading screw employing the VCMT including the above-described kneading flight imparts the extending flow to the materials at the respective multiple low-level chip portions, the distributivity of materials can be improved and thereby gel formation is surely prevented.

With kneading equipment provided with the above-mentioned kneading segments, even materials that are hard to be kneaded can surely be kneaded without leaving gel.

### Effect of the Invention

The kneading segment and the kneading equipment according to the present invention can surely knead materials without leaving gel.

### Brief Description of the Drawings

FIG. 1 is an explanatory diagram of a barrel and a kneading screw used for kneading equipment provided with kneading segments according to the present invention.
FIG. 2(a) is a perspective view of the kneading segments according to the present invention, and FIG. 2(b) is a cross sectional view of FIG. 2(a).
FIG. 3 is a cross sectional view of the kneading segments according to the present invention taken in the axial direction.
FIG. 4 is a chart showing relations between a shearing velocity and a shearing viscosity of materials used in an example.
FIG. 5(a) is a chart showing an average of a logarithmic extension applied to materials during kneading in relation to a clearance, and FIG. 5(b) is a chart showing a standard deviation of the logarithmic extension applied to the materials during kneading in relation to the clearance.
FIG. 6(a) is a chart showing a frequency distribution of the logarithmic extension for kneading up to five seconds, and FIG. 6(b) is a chart showing a frequency distribution of the logarithmic extension for kneading up to ten seconds.
FIG. 7(a) is a chart showing an average of an integral of a stress applied to the materials during kneading in relation to the clearance, and FIG. 7(b) is a chart showing a standard deviation of the integral of stress applied to the materials during kneading in relation to the clearance.
FIG. 8(a) is a chart showing a frequency distribution of the integral of stress for kneading up to five seconds, and FIG. 8(b) is a chart showing a frequency distribution of the integral of stress for kneading up to ten seconds.
FIG. 9(a) is a chart showing an average of a cumulative strain generated in the materials during kneading in relation to the clearance, and FIG. 9(b) is a chart showing a standard deviation of the cumulative strain generated in the materials during kneading in relation to the clearance.
FIG. 10(a) is a chart showing a frequency distribution of the cumulative strain for kneading up to five seconds, and FIG. 10(b) is a chart showing a frequency distribution of the cumulative strain for kneading up to ten seconds.
FIG. 11(a) is a chart showing an average of an energy (product of the strain and the stress applied to the materials integrated in relation to time) applied to the materials during kneading in relation to the clearance, and FIG. 11(b) is a chart showing a standard deviation of the energy (product of the strain and the stress applied to the materials integrated in relation to time) applied to the materials during kneading in relation to the clearance.
FIG. 12(a) is a chart showing a frequency distribution of the energy for kneading up to five seconds, and FIG. 12(b) a chart showing a frequency distribution of the energy for kneading up to ten seconds.
FIG. 13(a) and (b) are drawings showing diffused states of material particles resulting from rotation of kneading screws provided with the kneading segments of the example, and FIG. 13(c) and (d) are drawings showing diffused states of the material particles resulting from rotation of kneading screws provided with kneading segments of a comparative example.
FIG. 14(a) is a perspective view of conventional kneading segments, and FIG. 14(b) is a cross sectional view of FIG. 14(a).

### Mode for Carrying out the Invention

A detailed description is now given of an embodiment of kneading segments 1 and a continuous mixer 2 according to the present invention referring to drawings.

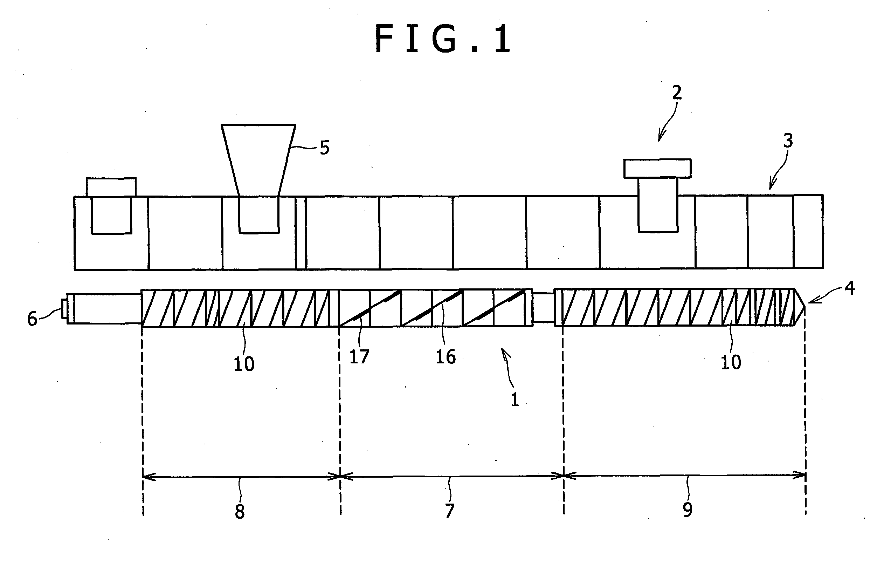

FIG. 1 shows a two-shaft continuous mixer 2 (kneading equipment) provided with the kneading segments 1 according to the present invention. The kneading equipment provided with the kneading segments 1 according to the present invention may be a two-shaft extruder instead of the continuous mixer. However, an example in which the kneading segments 1 are used for the continuous mixer is mentioned for describing the kneading segments 1 according to the present invention, in the following description.

The continuous mixer 2 includes a barrel 3 including a cavity, and kneading screws 4 provided so as to be inserted in the axial direction through an inside of the barrel 3. It should be noted that the barrel 3 and the kneading screws 4 are shown in a manner that they are arranged side by side in FIG. 1 for the sake of description. The continuous mixer 2 is configured to feed materials in the barrel 3 downstream while kneading the materials by rotating the kneading screws 4.

In the following description of the continuous mixer 2, the left side of the page is upstream and the right side of the page is downstream in FIG. 1. Moreover, the left/right direction of the page in FIG. 1 is the axial direction, and a vertical direction in relation to the axial direction (up/down direction of the page) is a vertical direction to the axis.

The barrel 3 is formed in an elongate tubular shape in the axial direction, and a cross section of the cavity formed therein has a shape of two circles arranged side by side or arranged so as to partially be overlapped (eye-glass shape). A hopper 5 for feeding the materials into the barrel 3 is disposed on the upstream side in the axial direction of the barrel 3. Moreover, a heating device (not shown) using an electric heater or heated oil is provided inside the barrel 3.

The kneading screws 4 are provided as a pair of left and right kneading screws so as to be inserted through the inner cavity in the eye-glass shape of the barrel 3. The pair of kneading screws 4, 4 are internally provided with spline shafts 6 formed in the axial direction and are configured to fix multiple segments in a penetrated form (impaled) by the spline shafts 6.

The kneading screws 4 are formed by combining various types of segment and constructed by three portions in the axial direction in FIG. 1. These three portions are a kneading portion 7 which kneads the materials, a feeding portion 8 which is disposed upstream of the kneading portion 7 to feed the materials to the kneading portion 7, and an extruding portion 9 which is disposed downstream of the kneading portion 7 to feed the materials which have been kneaded by the kneading portion 7 to a pelletizer or the like on the downstream side.

The feeding portion 8 and the extruding portion 9 among the three portions are constructed by multiple screw segments 10 provided with a screw flight (not shown) twisted into a spiral shape in the axial direction respectively, so as to feed the materials downstream in accordance with rotation of the kneading screws 4.

The kneading portion 7 is positioned at the center of the three portions and is constructed by multiple kneading segments 1 continuously arranged in the axial direction. According to this embodiment, the kneading segments are rotor segments 1 and the kneading portion 7 is constructed by the six rotor segments 1 continuously arranged in the axial direction.

Each of the rotor segments 1 is formed in an approximately elliptical shape in the cross section in the axially vertical direction. Moreover, on the center side of each of the rotor segments 1, an insertion hole 11 for inserting the spline shaft 6 is formed in the axial direction. The rotor segment 1 is provided with multiple serrations on an inner peripheral surface of the insertion hole 11 so as to be engaged with and integrally rotate with the spline shaft 6.

Each of the rotor segments 1 is provided with two lines of kneading flight 12 arranged on both sides of the rotational center of the kneading screw 4 in a continuous manner in the axial direction. When the kneading screw 4 rotates, a top surface 15 of the kneading flight 12 rotates so as to almost touch the inner peripheral surface of the barrel 3 so as to completely scrub off the materials adhered to the barrel 3 and knead the materials.

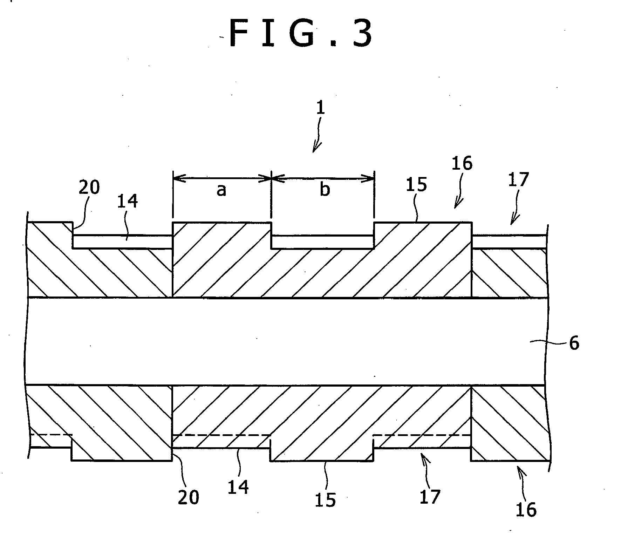

A cutout section 13 formed into a concaved shape by cutting out a portion, along the axis, of the top surface 15 radially inward (toward the inside in the axially vertical direction) is formed on the top surface 15 of the kneading flight 12. The kneading screw 4 according to this embodiment is provided with multiple cutout sections 13 at a predetermined interval in the axial direction (specifically, in a manner that an axial length "a" of the top surface 15 in which the cutout section 13 is not formed and an axial length "b" of the cutout section 13 are equal to each other as shown in FIG. 3). As a result, a bottom surface 14, which is described later, of the cutout section 13 is formed so as to have a larger gap in relation to the inner wall of the barrel 3 (chip clearance) than that of the top surface 15 of the kneading flight 12. In other words, on the screw 4 according to this embodiment, the top surface 15 of the kneading flight 12 constitutes a high-level chip portion 16 having a small chip clearance and the bottom surface 14 of the cutout section 13 constitutes a low-level chip portion 17 having a larger chip clearance than that of the high-level chip portion 16.

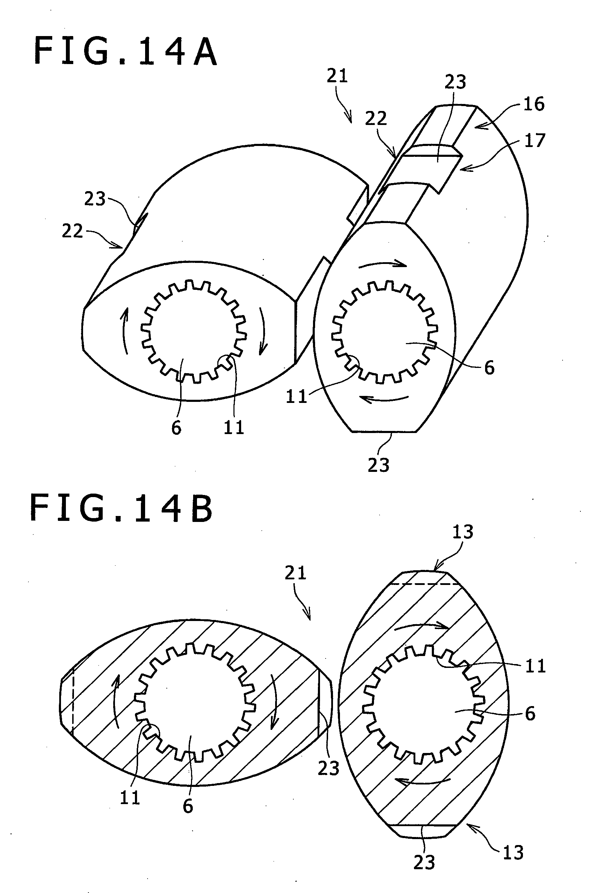

On a rotor segment alternately provided with the high-level chip portions 16 and the low-level chip portions 17 in the axial direction as described above, such as a conventional VCMT rotor segment 21 shown in FIGs. 14(a) and (b), the chip clearance of the high-level chip portion 16 in relation to the inner wall of the barrel 3 is made smaller than that of the low-level chip portion 17. Since materials are directed to the small chip clearance and the materials are kneaded under a force applied in the shear direction, it is possible to impart a high dispersibility to the materials to be kneaded. On the other hand, the chip clearance of the low-level chip portion 17 in relation to the inner wall of the barrel 3 is made larger than that of the high-level chip portion 16. Since the materials are directed to the large chip clearance and the materials are knead under a force applied in the extension direction, it is possible to impart a high distributivity to the materials to be kneaded. Therefore, the materials can properly be kneaded with a high dispersibility and distributivity being imparted.

However, in the case where materials which are hard to be kneaded are kneaded with each other, for example, if polyethylene and polypropylene of which molecular weight and melt viscosity are completely different are kneaded with each other, the kneading performance even provided by the VCMT rotor segments 1 with a high kneading performance may be insufficient. In this case, portions which are insufficiently kneaded may remain as gel in the materials after kneading. It is impossible to completely eliminate the gel even by adding a decomposition promoting agent and it causes, in forming a film or a sheet from the kneaded materials; defects such as fisheye, which is not preferable.

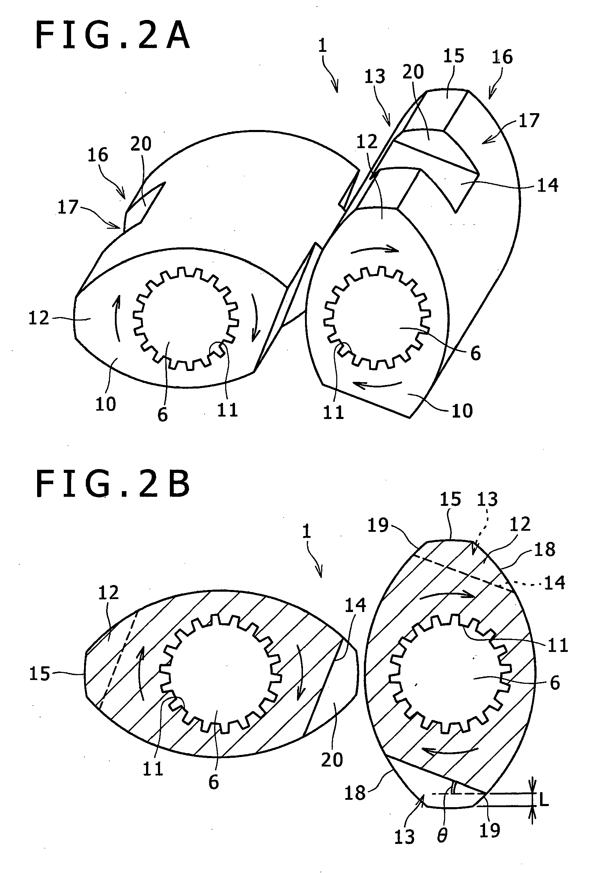

In order to address this problem, in the kneading segment 1 according to the present invention, the cutout section 13 surrounded by the two side surfaces 20, 20 facing in the axial direction and the bottom surface 14 provided between these side surfaces 20, 20 is formed on the top surface 15 of the kneading flight 12, as shown in FIG. 2(a). The bottom surface 14 of the cutout section 13 is formed in a planar shape tilted in relation to the top surface 15. As a result, an opening 18 of the cutout section 13 facing one side in the rotational direction of the kneading screw 4 has a larger area than that of an opening 19 facing the other side.

A description will now be given of the cutout section 13 according to the present invention.

The cutout section 13 in a concaved shape is formed by cutting out radially inward a portion, along the axis, of the top surface 15 of the kneading flight 12. The cutout section 13 is formed by the two side surfaces 20 and the bottom surface 14 formed between these side surfaces 20. The side surfaces 20 are formed radially inward from the top surface 15 of the kneading flight 12 in the axially vertical direction, and are formed so as to face each other while being spaced apart in the axial direction. Further, the bottom surface 14 is formed between the two side surfaces 20 as described later.

The bottom surface 14 is formed in a planar shape tilted in relation to the top surface 15 as shown in FIG. 2(a), and is configured in a manner that its distance to the inner wall of the barrel 3 gradually increases in the rotational direction of the kneading screw 4.

Since the bottom surface 14 is formed in a planar shape tilted in relation to the top surface 15, the opening 18 of the cutout section 13 facing one side in the rotational direction of the kneading screw 4 has a larger area than that of the opening 19 facing the other side. As a result, the area in the cutout section 13 through which materials pass decreases from the opening 18 on one side toward the opening 19 on the other side.

Then, when the kneading screw 4 is rotated in a manner that materials flow in from the opening 18 side having a larger area, the materials which have flown into the cutout section 13 are prevented from escaping by the two side surfaces 20 and subjected to a force in the extension direction because of the passing area thereof being gradually narrowed. Therefore, a strong extension flow is imparted to the materials and the materials can be kneaded with a proper distributivity.

As a result, the kneading segment 1 according to the present invention can knead materials with a proper distributivity which are hard to be kneaded with each other. Thus, it is possible to surely prevent defects such as fisheye without portions which are insufficiently kneaded and left as gel in the materials after kneading.

The tilt angle θ of the bottom surface 14 formed in relation to the top surface 15 is 10-25°, preferably 15-20° as shown in FIG. 2(b). As long as the tilt angle θ of the bottom surface 14 formed in relation to the top surface 15 is 10-25°, preferably 15-20° in this way, a large difference in the opening area is made between one side and the other side, so that a sufficient extension flow is generated in materials so as to knead the materials with a proper distributivity.

Moreover, a distance from the bottom surface 14 to the top surface 15 (shortest distance) L is preferably 3-14%, and more preferably 5-10% in relation to the maximum distance from the axial center of the kneading screw 4 to the top surface 15. If the distance L from the bottom surface 14 to the top surface 15 is too short, such a large force is applied by the materials that an end of the bottom surface 14 may be chipped. Meanwhile, if the distance L is too long, the amount of the materials passing through the cutout section 13 becomes too large to impart a sufficient force in the extension direction to the materials. Thus, the distance L is preferably 3-14% and more preferably 5-10% as mentioned above.

### Example

A detailed description will now be given of the present invention referring to an example and a comparative example.

In the example, the rotor segments 1 having the bottom surface 14 of the cutout section 13 tilted in relation to the top surface 15 (rotor segments 1 according to the present invention) were used for kneading. Moreover, in the comparative example, the rotor segments 21 having the bottom surface 14 formed approximately in parallel with the top surface 15 (conventional rotor segments) were used for kneading. Then, influences due to the difference between the rotor segments 1 and 21 on a logarithmic extension (logarithm of an extension applied to materials during kneading), an integral of a stress (time integral of a stress applied to the materials), a cumulative strain (time integral of a strain generated in the materials), and an energy (time integral of a product of the stress and the strain), which are described later, are calculated by means of computer simulation.

The rotor segment 1 used for the example has a cylindrical surface as the top surface 15 around the axial center of the kneading screw 4 as shown in FIGs. 2(a) and (b), the diameter of which is 60mm. This rotor segment 1 is provided with a pair of kneading flights 12, 12 at positions symmetrical with each other in relation to the axial center of the kneading screw 4, and the cut out portion 13 is formed on each of the kneading flight 12. The cutout section 13 of the example is provided with the bottom surface 14 tilted in relation to the top surface 15. The maximum distance in the radial direction between these bottom surfaces 14, 14 (distance between opening edges on the entrance side at the radially most outer sides of the bottom surfaces 14) is 53.15mm, and the minimum distance thereof (distance between opening edges on the exit side at the radially most inner sides of the bottom surfaces 14) is 45mm. In terms of the tilt angle 8 and the distance L, which are described before, the bottom surface 14 of the example is formed at the tilt angle θ=20° in relation to the top surface 15, and the distance L is 8% of the maximum distance from the top surface 15 to the axial center of the kneading screw 4.

On the other hand, in the rotor segment 21 used for the comparative example, the bottom surface 23 of the cutout section 22 is formed in parallel with the top surface as shown in FIG. 14. Accordingly, the bottom surface 23 of the cutout section 22 of the rotor segment 21 in the comparative example is not tilted in relation to the top surface, which is different from the bottom surface 14 of the rotor segment 1 of the example. The rotor segment 21 of the comparative example is formed in the same shape as the rotor segment 1 of the example except for the point that the bottom surface is not tilted.

Table 1 shows kneading conditions when the rotor segments 1 of the example and the rotor segments 21 of the comparative example were used. In Table 1, a chip clearance C1 represents an example in which the rotor segment 1 is arranged in the barrel 3 in a manner that the gap formed between the top surface 15 (top surface 15 of the kneading flight 12 which is the high-level chip portion 16) and the inner wall of the barrel 3 is 1.3mm. Meanwhile, a chip clearance C2 represents an example in which the rotor segment 1 is arranged in the barrel 3 in a manner that the gap formed between the top surface 15 and the inner wall of the barrel 3 is 2.6mm.

**Table 1**

| | |
|---|---|
| rotation speed | 200rpm |
| melting temperature | 180°C |
| material | PP-type resin |
| chip clearance in relation to barrel | C1 (1.3mm) |
| | C2 (2.6mm) |

The respective evaluation indices described below were calculated and evaluated in accordance with the kneading conditions in Table 1.

It was determined, before calculating the evaluation indices, whether the Carreau model could be applied by treating the materials in the melted state as non-Newtonian fluids.

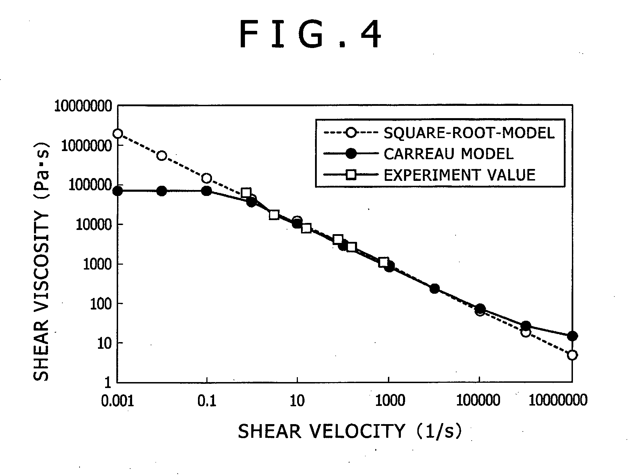

When the actual shear velocity and shear viscosity of the materials are measured while the melting temperature is changed, the actual measured result coincides with the Carreau model better than with the square-root-model as shown in FIG. 4. As a result, it is appreciated that the dynamic viscosity characteristics of the materials used for the experiment can be calculated according to the Carreau model.

Assuming that material particles placed between the rotor segments present behaviors which are calculated according to the Carreau model when the rotor segments rotate, the respective evaluation indices were obtained by means of the particle tracking method (method for evaluating the evaluation indices in accordance with the history of strain rate and stress applied to the material particles moving in a flow of materials (resins)). The respective evaluation indices were evaluated by calculating the evaluation indices for all the material particles to obtain an average and a standard deviation of the calculated evaluation indices. The result thereof is shown below.

### (1) Logarithmic extension

The logarithmic extension represents how all the material particles (line elements) placed between the rotor segments move (diffuse) at a velocity according to the flow analysis when the kneading screws 4 rotate. The logarithmic extension logarithmically represents a ratio of a line element's length after a predetermined period of kneading in relation to its length before the kneading, which is obtained for the cases where kneading period is five seconds and ten seconds. The logarithmic extension is an index used for evaluating the distributivity of kneading, in which the distributivity increases as the "logarithmic extension" increases.

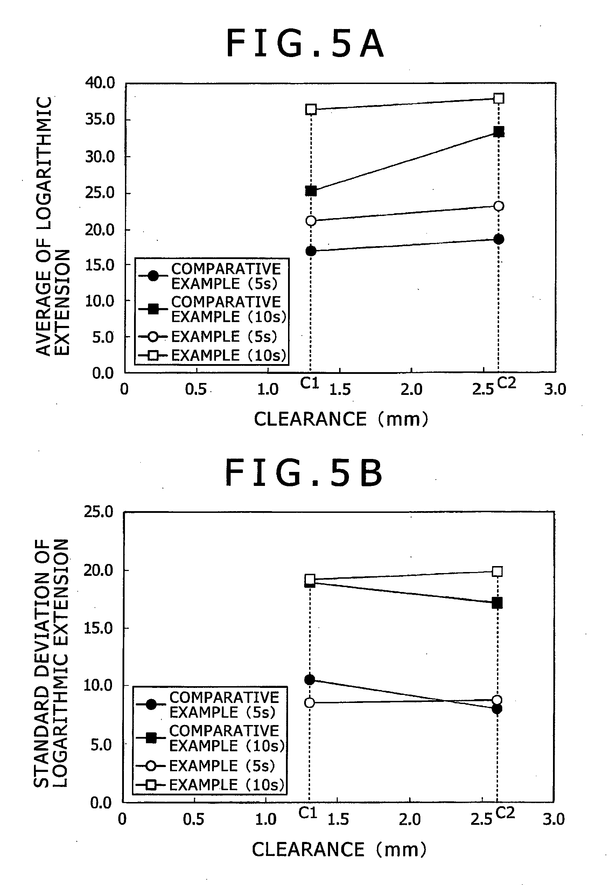

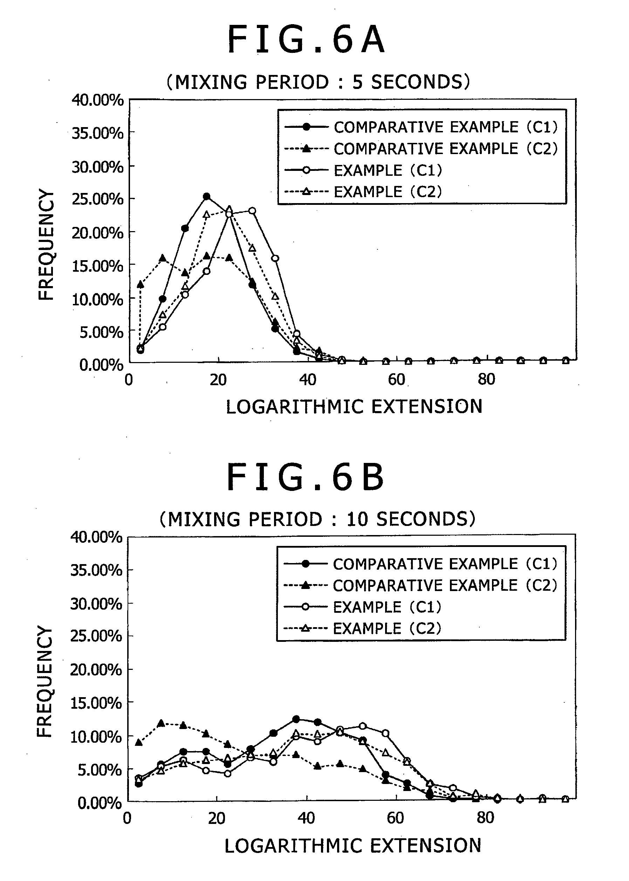

The calculated logarithmic extensions of all the particles were averaged to obtain a logarithmic average, and the logarithmic average plotted in relation to the clearance is shown as "average of logarithmic extension" in FIG. 5(a), and the standard deviation of the logarithmic extension plotted in relation to the clearance is shown as "standard deviation of logarithmic extension" in FIG. 5(b). Moreover, the frequency distribution of the "logarithmic extension" for the case where kneading period is five seconds is shown in FIG. 6(a), and the frequency distribution for the case where kneading period is ten seconds is shown in FIG. 6(b).

Referring to the cases where the kneading period is five seconds in FIG. 5(a), the kneading using the rotor segments 1 of the example (black circles) presents a larger "average of logarithmic extension" than the kneading using the rotor segments 21 of the comparative example (white circles), in both cases where the chip clearance is C1 (1.3mm) and the chip clearance is C2 (2.6mm). Moreover, the tendency that the example presents a larger "average of logarithmic extension" than that of the comparative example also holds true for the case where the kneading period is ten seconds. From this fact, it is appreciated that, by kneading using the rotor segments 1 of the example, materials can be kneaded in a manner that the materials are extended more than kneading using the rotor segments 21 of the comparative example.

On the other hand, in a result in FIG. 5(b), little difference is observed in the "standard deviation of logarithmic extension" between the case where the rotor segments 1 of the example were used for kneading and the case where the rotor segments 21 of the comparative example were used for kneading. This tendency holds true for the chip clearances C1 and C2, and also for FIG. 6(a) and FIG. 6(b). In other words, it is appreciated that the above-mentioned results do not present a locally increased "logarithmic extension" of only a portion of material particles, but present an overall increased "logarithmic extension", from the fact that there is not a large difference in the standard deviation of the "logarithmic extension" whichever of the rotor segments 1 of the example or the rotor segments 21 of the comparative example were used for kneading.

### (2) Integral of stress

The integral of stress is a time integral of stress applied to material particles when the kneading screws 4 rotate for a predetermined kneading period. The integral of stress is obtained both for a time integration for kneading up to five seconds and a time integration for kneading up to ten seconds.

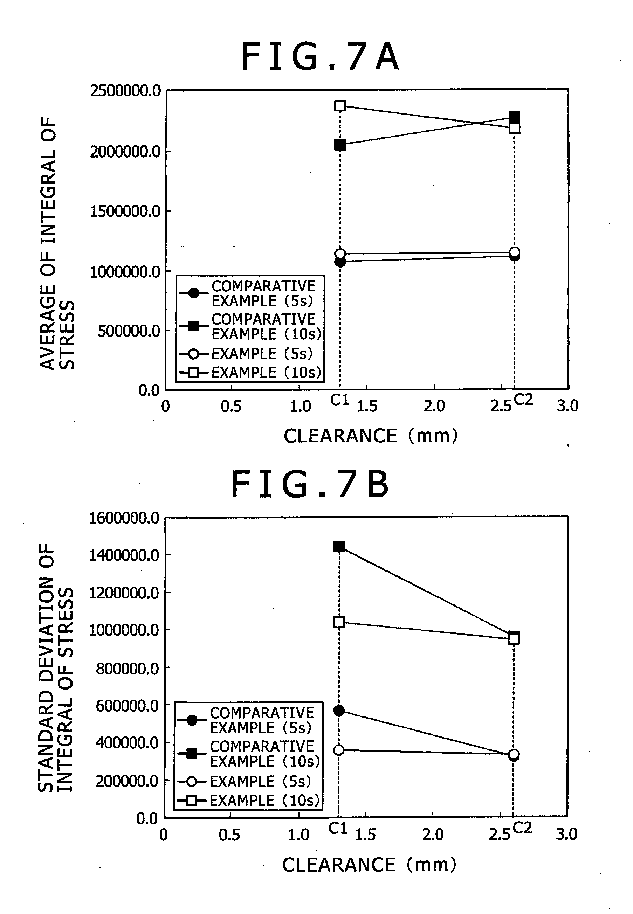

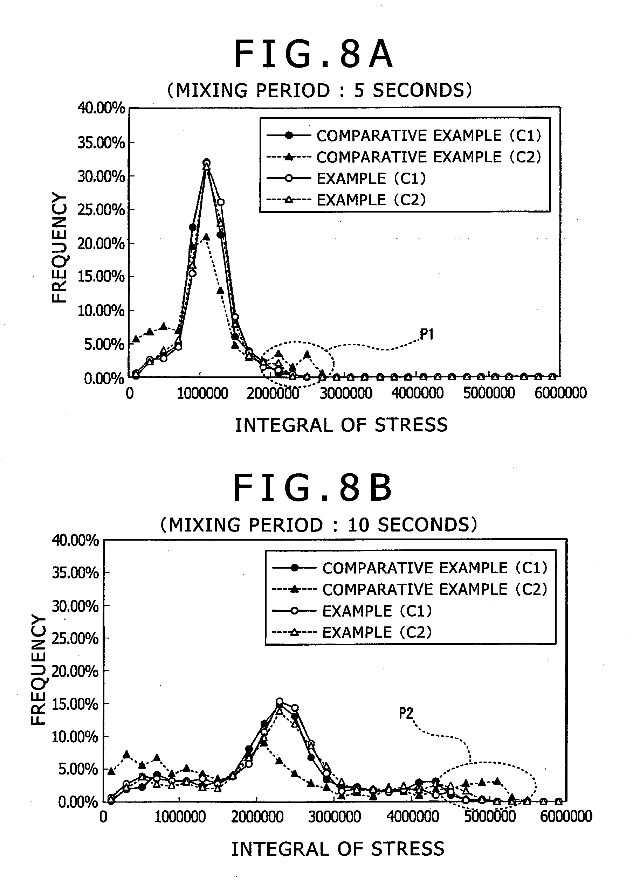

The obtained integrals were averaged over the entire particles, and the average plotted in relation to the clearance is shown as "average of integral of stress" in FIG. 7(a), and the standard deviation of the integral plotted in relation to the clearance is shown as "standard deviation of integral of stress" in FIG. 7(b). Moreover, the frequency distribution of the "integral of stress" for the case where kneading period is five seconds is shown in FIG. 8(a), and the frequency distribution for the case where kneading period is ten seconds is shown in FIG. 8(b).

Referring to results in FIGs. 7(a)-8(b), it is appreciated that there is not a large difference in the "average of integral of stress", "standard deviation of integral of stress", and frequency distribution of "integral of stress" between the case where the rotor segments 1 of the example were used for kneading and the case where the rotor segments 21 of the comparative example were used for kneading. The rotor segment 1 of the example is configured so as to introduce a larger quantity of materials than the rotor segment 21 of the comparative example into the cutout section 13 by tilting the bottom surface 14. However, there are not a large differences in the above-described evaluation indices and thus there is not a case where a larger load is applied during kneading by the rotor segments 1 of the example, compared to kneading by the rotor segments 21 of the comparative example. Therefore, there is no possibility that a problem such as a large load is imposed on a drive mechanism of the kneading screws 4 occurs during kneading.

On the other hand, referring to the frequency distribution of "integral of stress" for the case where the kneading period is five seconds as shown in FIG. 8(a), a variation in frequency is found only in a result of the comparative example around 2000000-2600000 of the integral of the stress (portion denoted by P1 in the drawing). During the kneading that presents this variation in frequency, abnormal heat generation such as shear heat generation may occur, and a problem such as degradation of materials due to the heat generation occurs with a high possibility. Moreover, in a result for the case where the kneading period is ten seconds shown in FIG. 8(b), a variation similar to the one found in FIG. 8(a) is found only in a result of the comparative example around 5000000 of the integral of stress (portion denoted by P2 in the drawing), which suggests that abnormal heat generation occur with a high possibility.

Any variation in frequency is not observed in the results of the example, and it is thus appreciated that abnormal heat generation hardly occurs in the rotor segments 1 of the example and the materials can be kneaded without degradation caused by abnormal heat generation.

### (3) Cumulative strain and energy

The cumulative strain is a time integral of a strain generated in the material particles when the kneading screws 4 are rotated for a predetermined kneading period. The cumulative strain is obtained both for a time integration for the case where kneading period is five seconds and a time integration for the case where kneading period is ten seconds.

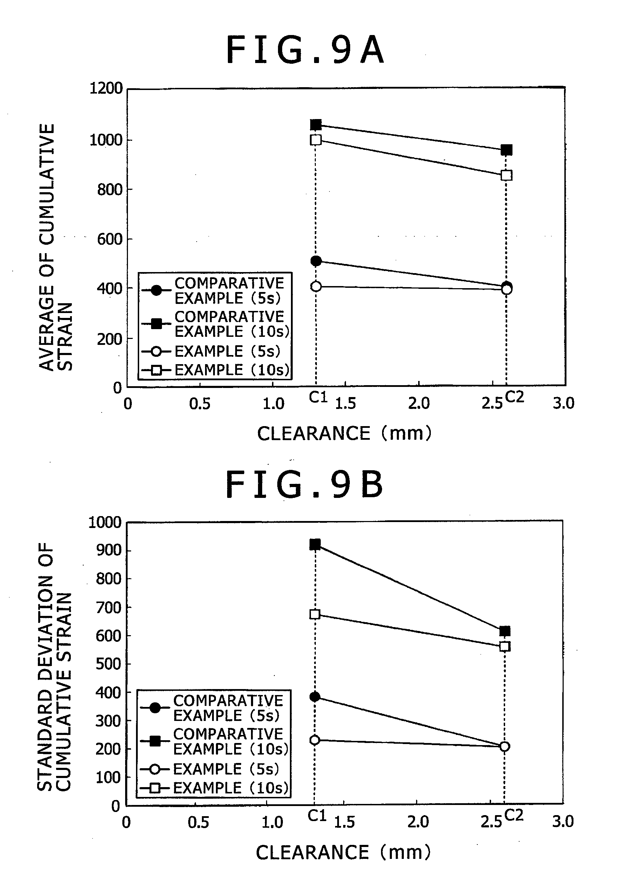

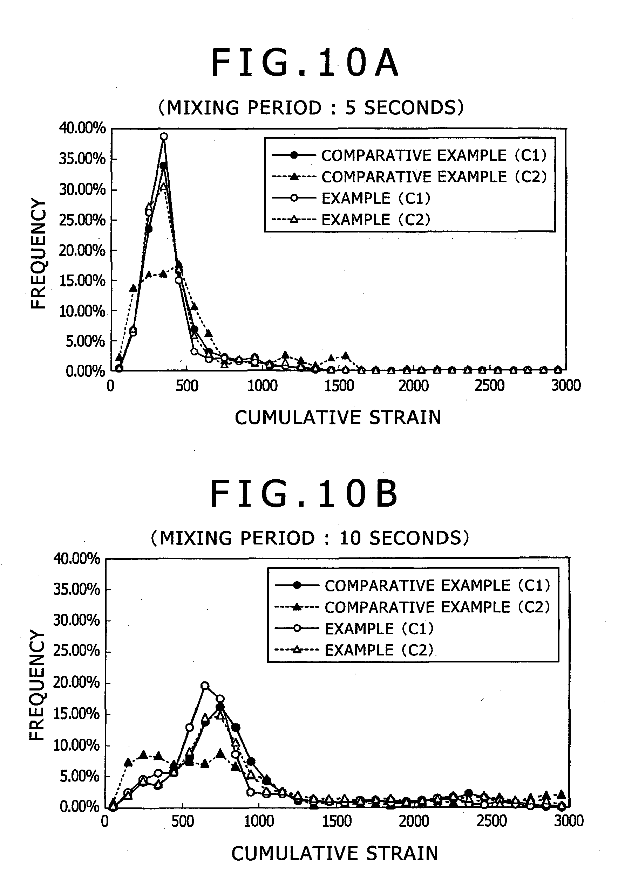

The obtained integrals were averaged over the entire particles, and the average plotted in relation to the clearance is shown as "average of cumulative strain" in FIG. 9(a), and the standard deviation of the integral plotted in relation to the clearance is shown as "standard deviation of cumulative strain" in FIG. 9(b). Moreover, the frequency distribution of the "cumulative strain" for the case where kneading period is five seconds is shown in FIG. 10(a), and the frequency distribution for the case where kneading period is ten seconds is shown in FIG. 10(b).

On the other hand, a time integral of a product of this strain and the above-described stress is "energy". The "energy" is an index used for evaluating the dispersibility of kneading, and the dispersibility increases as the "energy" increases. The energy is obtained both for a time integration for the case where kneading period is five seconds and a time integration for the case where kneading period is ten seconds.

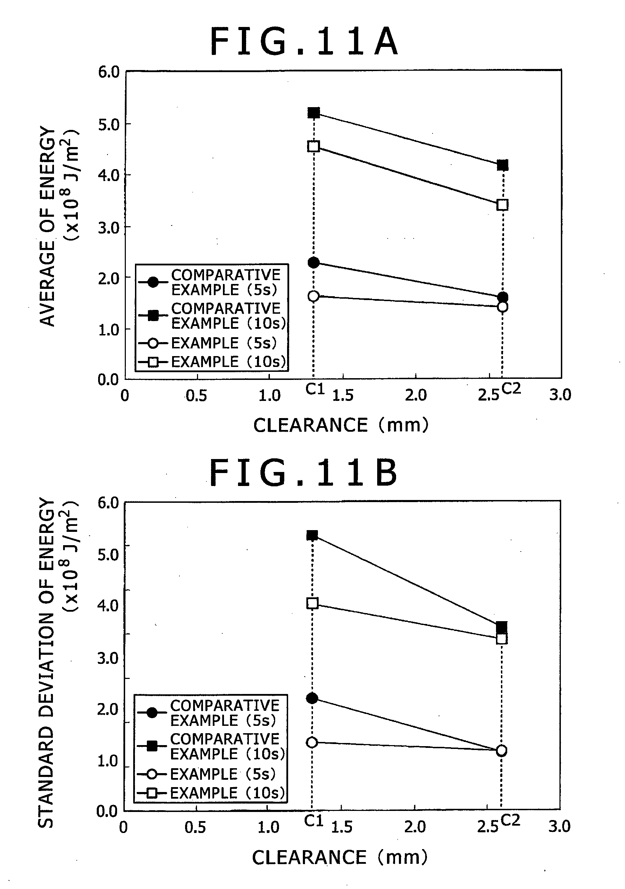

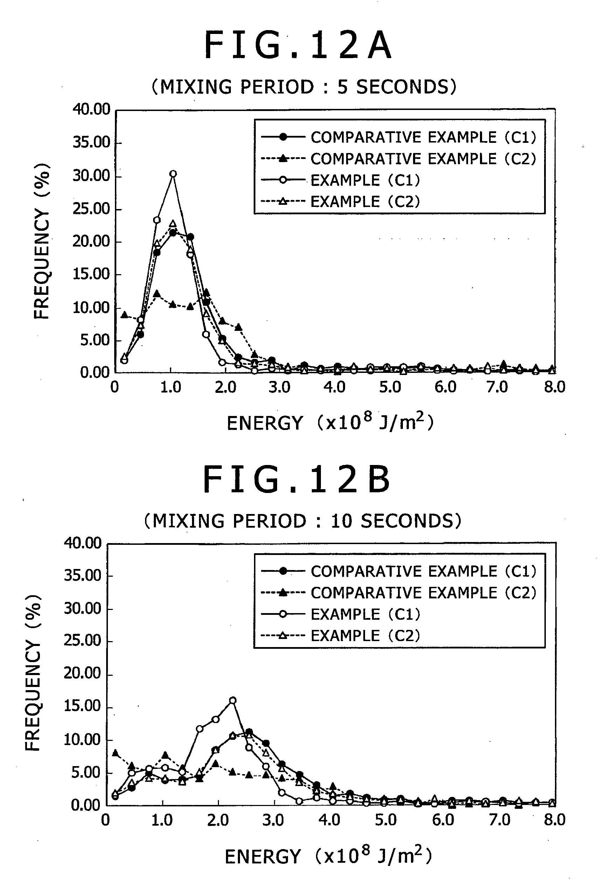

The obtained "energy" averaged over the entire particles is shown as "average of energy" in FIG. 11(a), and the standard deviation of the integral is shown as "standard deviation of energy" in FIG. 11(b). Moreover, the frequency distribution of the "energy" for the case where kneading period is five seconds is shown in FIG. 12(a), and the frequency distribution for the case where kneading period is ten seconds is shown in FIG. 12(b).

Referring to the results in FIGs. 9(a)-12(b), a large difference is not observed in the average, standard deviation, and frequency distribution of "cumulative strain" and "energy" between the case where the rotor segments 1 of the example were used for kneading and the case where the rotor segments 21 of the comparative example were used for kneading. In other words, it is considered that the rotor segments 1 of the example can knead the materials without deteriorating the dispersibility of materials compared to the rotor segments 21 of the comparative example.

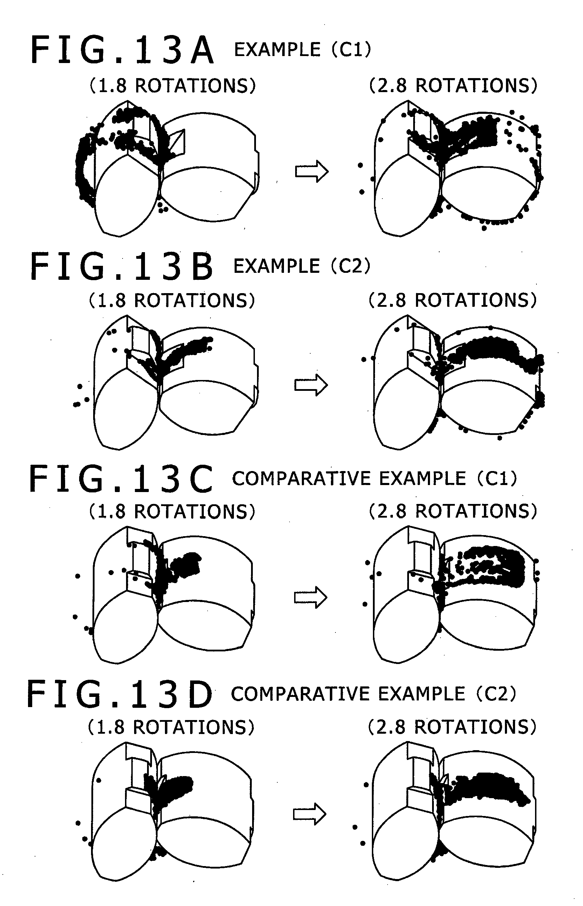

Further, FIGs. 13 visualize how the material particles are distributed in the case where the chip clearance is C1 and C2 for the rotor segments 1 of the example and the rotor segments 21 of the comparative example, respectively. The material particles are diffused in a wider extent around the rotor segments 1 of the example shown in FIGs. 13(a) and (b) compared to the rotor segments 21 of the comparative example shown in FIGs. 13(c) and (d), and thus it is appreciated that the materials are kneaded with a proper distributivity.

From this fact, it is appreciated that the kneading segments 1 of the example can knead the materials with a proper distributivity compared to the kneading segments 21 of the comparative example. Thus, according to the kneading segments 1 of this embodiment, there is no possibility that portions which have insufficiently been kneaded are left as gel in the materials after kneading, and thus defects such as fisheye can surely be prevented.

The present invention is not limited to the respective embodiments described above, but shapes, structures, materials, and combinations of the respective members can properly be changed within the essential scope of the present invention.

For example, in the above-described embodiment, the description of the kneading segment 1 according to the present invention is given with reference to the example in which, as to the kneading screw 4 employing the VCMT including the kneading flight 12 on which the high-level chip portions 16 having a constant chip clearance in relation to the inner wall of the barrel 3 and the low level chip portions 17 having a larger chip clearance than that of the high-level chip portions 16 are alternately formed in the axial direction, the low-level chip portion 17 of the kneading screw 4 is considered as the cutout section 13.

However, the cutout section 13 is not limited to the low-level chip portion 17 on the kneading screw 4 employing the VCMT, and the kneading segment 1 on which the cutout section 13 is provided is not limited to the rotor segment. For example, the cutout section 13 may be disposed on the top surface 15 of the kneading flight 12 of a kneading disk segment, the bottom surface 14 of the cutout section 13 may be tilted in relation to the top surface 14, and this kneading disk segment may be employed as the kneading segment 1.

### Reference Numerals

- 1: kneading segment (rotor segment)
- 2: continuous mixer (kneading equipment)
- 3: barrel
- 4: kneading screw
- 5: hopper
- 6: spline shaft
- 7: kneading portion
- 8: feeding portion
- 9: extruding portion
- 10: screw segment
- 11: insertion hole
- 12: kneading flight
- 13: cutout section
- 14: bottom surface of cutout section
- 15: top surface of kneading flight
- 16: high-level chip portion
- 17: low-level chip portion
- 18: opening on one side (opening of cutout section facing the side which materials enter)
- 19: opening on the other side (opening of cutout section facing the side from which materials exit)
- 20: side surface of cutout section
- 21: rotor segment (conventional one)
- 22: cutout section (conventional one)
- 23: bottom surface (conventional one)
- θ: angle of bottom surface formed in relation to top surface
- L: distance from bottom surface to top surface (shortest distance)
- a: axial length of top surface of kneading flight
- b: axial length of bottom surface of cutout section

## Claims

1. A kneading segment (1) disposed on a kneading screw (4) which is housed in a rotatable manner in a barrel (3) having an inner cavity, and comprising a kneading flight (12) kneading materials supplied into the barrel(3) by rotating in accordance with rotation of the kneading screw (4),**characterized in that**
a cutout section (13) which is formed into a concaved shape on a top surface (15) of said kneading flight (12) by cutting out radially inward a portion, along an axis, of the top surface (15) and which is surrounded by two side surfaces (20) facing each other in an axial direction and a bottom surface (14) provided between said side surfaces (20) is formed, and
said cutout section (13) is formed in a manner that an opening (18) of the cutout section (13) facing one side of the rotational direction of the kneading screw (4) has a larger area than that of an opening (19) facing the other side, by forming said bottom surface (14) of said cutout section (13) in a planar shape tilted in relation to the top surface (15).

2. The kneading segment (1) according to claim 1, wherein:
said kneading flight(12) alternately includes, in the axial direction, a high-level chip portion (16) having a constant chip clearance in relation to an inner wall of the barrel (3), and a low-level chip portion (17) having a larger chip clearance than that of said high-level chip portion (16); and
said low-level chip portion (17) is formed by said cutout section (13).

3. Kneading equipment (2) comprising the kneading segment (1) according to any one of claim 1 and 2.

## Patentansprüche

1. Knetsegment (1), das an einer Knetschnecke (4) angeordnet ist, die in einer drehbaren Art in einer Trommel (3) mit einem Innenhohlraum aufgenommen ist, und die einen Knetflügel (12) aufweist, der der Trommel (3) zuzuführende Materialien durch Drehung in Übereinstimmung mit der Drehung der Kentschraube (4) knetet, **gekennzeichnet durch**
einen Einschnittabschnitt (13), der in einer konkaven Form an einer oberen Fläche (15) des Knetlaufs (12) ausgebildet ist, indem ein Abschnitt der oberen Fläche (15) entlang einer Achse radial einwärts eingeschnitten ist, und der von zwei Seitenflächen (20) umgeben ist, die einander in einer axialen Richtung zugewandt sind, und eine untere Fläche (14) zwischen den Seitenflächen (20) ausgebildet ist, und
der Einschnittabschnitt (13) derart ausgebildet ist, dass eine Öffnung (18) des Einschnittabschnitts (13), die einer Seite der Drehrichtung des Knetschraube (4) zugewandt ist, eine größere Fläche als jene einer Öffnung (19) hat, die der anderen Seite zugewandt ist, indem die untere Fläche (14) des Einschnittabschnitts (13) in einer ebenen Form ausgebildet ist, die bezüglich der oberen Fläche (15) geneigt ist.

2. Knetsegment (1) gemäß Anspruch 1, wobei
der Knetlauf (12) in der Achsrichtung alternierend einen Hochniveauabkratzabschnitt (16) mit einem konstanten Abkratzspalt mit Bezug auf eine Innenwand der Trommel (3) und einen Niederniveauabkratzabschnitt (17) mit einem größerem Abkratzspalt als jenem des Hochniveauabkratzabschnitt (16) hat, und
der Niederniveauabkratzabschnitt (17) durch den Einschnittabschnitt (13) ausgebildet ist.

3. Knetausrüstung (2) mit dem Kentsegment (1) gemäß einem der Ansprüche 1 und 2.

## Revendications

1. Segment de malaxage (1) disposé sur une vis de malaxage (4) qui est logée de manière rotative dans un cylindre (3) ayant une cavité interne, et comprenant une vis sans fin de malaxage (12) malaxant des matériaux alimentés dans le cylindre (3) par rotation selon une rotation de la vis de malaxage (4), **caractérisé en ce que**
une section de découpe (13) qui est formée selon une forme concave sur une surface supérieure (15) de ladite vis sans fin de malaxage (12) en découpant radialement vers l'intérieur une partie, le long d'un axe, de la surface supérieure (15) et qui est entourée par deux surfaces latérales (20) se faisant face dans une direction axiale et une surface inférieure (14) prévue entre lesdites surfaces latérales (20) est formée, et
ladite section de découpe (13) est formée de manière à ce qu'une ouverture (18) de la section de découpe (13) faisant face à un côté de la direction de rotation de la vis de malaxage (4) ait une superficie plus grande que celle d'une ouverture (19) faisant face à l'autre côté, en formant ladite surface inférieure (14) de ladite section de découpe (13) en une forme plane inclinée par rapport à la surface supérieure (15).

2. Segment de malaxage (1) selon la revendication 1, dans lequel :
ledit vis sans fin de malaxage (12) comporte alternativement, dans la direction axiale, une partie de coupe de niveau élevé (16) ayant un espace de coupe constant par rapport à une paroi intérieure du cylindre (3), et une partie de coupe de niveau bas (17) ayant un espace de coupe plus grand que celui de ladite partie de coupe de niveau élevé (16) ; et
ladite partie de coupe de niveau bas (17) est formée par ladite section de découpe (13).

3. Équipement de malaxage (2) comprenant le segment de malaxage (1) selon l'une quelconque des revendications 1 et 2.
